# FASCICULE DE BREVET EUROPEEN

(11) **EP 1 360 776 B1**
(45) Date de publication et mention de la délivrance du brevet: **04.07.2007**
(21) Numéro de dépôt: 01991895.2
(22) Date de dépôt: 14.12.2001
(51) Int. Cl.: H04B 7/00

(54) **PROCEDE POUR L'ENVOI D'INFORMATIONS PERSONNALISEES A AU MOINS UNE PERSONNE EQUIPEE D'UN APPAREIL PORTABLE**
VERFAHREN ZUM SENDEN VON KUNDENSPEZIFISCHEN DATEN AN MINDESTENS EINE PERSON AUSGERÜSTET MIT EINER TRAGBAREN VORRICHTUNG
METHOD FOR SENDING CUSTOMISED DATA TO AT LEAST A PERSON PROVIDED WITH A PORTABLE APPARATUS

(30) Priorité: 14.12.2000 GB 0030506
(43) Date de publication de la demande: 12.11.2003
(73) Titulaire: Elgrably, Eric, Casablanca (MA)
(72) Inventeur: Elgrably, Eric, Casablanca (MA)
(74) Mandataire: Tanty, François
(86) Numéro de dépôt international: PCT/IB2001/002793
(87) Numéro de publication internationale: WO 2002/049234

(56) Documents cités:
- EP-A- 0 131 211
- WO-A-99/60782
- FR-A- 2 768 877
- US-A- 5 249 044
- PATENT ABSTRACTS OF JAPAN vol. 1999, no. 14, 22 décembre 1999 (1999-12-22) & JP 11 259031 A (MATSUSHITA ELECTRIC IND CO LTD), 24 septembre 1999 (1999-09-24)
- DATABASE EPODOC [en ligne] EUROPEAN PATENT OFFICE, THE HAGUE, NL; XP002241046 & ZA 9 906 812 A (CATALINA MARKETING INT) 17 mai 2000 (2000-05-17) -& WO 00 75911 A (CATALINA MARKETING INT) 14 décembre 2000 (2000-12-14)

## Description

La présente invention concerne notamment l'envoi d'informations personnalisées à au moins une personne équipée d'un appareil portable.

Il est connu d'utiliser des véhicules tels que des bus ou taxis comme supports, publicitaires.

Dans les grandes villes en particulier, les populations ne sont pas les mêmes selon les quartiers et un contenu publicitaire donné n'aura pas nécessairement partout le même impact

Il existe un besoin pour disposer d'un procédé permettant d'améliorer la diffusion d'informations, notamment publicitaires, par exemple depuis des véhicules tels que des bus ou taxis.

Par ailleurs, il est connu d'utiliser des panneaux publicitaires aptes à envoyer des informations à des personnes se trouvant à proximité, ou à recevoir des ordres d'achat par exemple. Ces panneaux publicitaires émettent des informations indépendamment du profil de la personne qui les reçoit.

Il existe en outre un besoin pour disposer d'un procédé permettant de connaître l'impact d'une diffusion d'informations par un panneau publicitaire ou de personnaliser les informations envoyées à des personnes ayant pris connaissance d'informations diffusées par le panneau publicitaire.

La présente invention a notamment pour objet de répondre à l'un au moins des besoins précités grâce à un procédé pour l'envoi d'informations personnalisées à au moins une personne équipée d'un appareil portable ayant une mémoire et apte à échanger des informations par une liaison non filaire, ce procédé comportant les étapes suivantes:
- afficher des informations au moyen d'au moins un dispositif d'affichage distinct de l'appareil portable et permettant d'afficher des images différentes,
- détecter la présence dudit appareil dans une zone géographique, par exemple une zone géographique s'étendant au moins dans le champ de lecture visuelle des informations affichées sur le dispositif d'affichage,
- pendant la présence dudit appareil dans ladite zone géographique, lire au moins une information dans la mémoire de l'appareil, cette information ayant été mémorisée lors d'une utilisation antérieure de l'appareil ou permettant d'identifier l'appareil,
- envoyer à l'appareil des informations personnalisées dont le contenu est fonction de ladite au moins une information lue dans la mémoire et éventuellement d'au moins une information affichée sur le dispositif d'affichage et/ou mémoriser les informations lues dans les mémoires des appareils présents dans ladite zone géographique entre deux instants prédéterminés.

Les informations affichées peuvent comporter un film publicitaire ou un message rappelant une loi applicable.

Grâce à l'invention telle que définie ci-dessus, il est possible à partir des informations lues dans la mémoire d'un appareil portable par exemple de déterminer les centres d'intérêts d'une personne ou de savoir si celle-ci utilise son appareil pour faire des achats à distance, par exemple. Ainsi, au lieu d'envoyer des informations non personnalisées aux personnes se trouvant dans la zone géographique précitée, il est possible de personnaliser le contenu des informations envoyées, par exemple en transmettant uniquement des informations susceptibles d'intéresser la personne compte tenu de ses centres d'intérêt. Il est également possible de déterminer si la personne peut être autorisée à recevoir des appels dans la zone géographique, notamment lorsque celle-ci est une salle de spectacle ou un hôpital. L'information envoyée peut alors provoquer l'extinction de certains appareils, par exemple.

La zone géographique précitée peut être fonction de l'emplacement du dispositif d'affichage.

Dans une mise en oeuvre particulière de l'invention, les informations mémorisées dans la mémoire de l'appareil l'ont été lors d'une utilisation antérieure de l'appareil, par exemple alors que ce dernier était hors de la zone géographique précitée.

La zone géographique peut s'étendre à partir d'un point fixe dans le temps ou, en variante, se déplacer au cours du temps.

Dans une mise en oeuvre particulière de l'invention, la mémoire de l'appareil est apte à échanger des informations par une liaison non filaire avec un émetteur et/ou un récepteur lorsque l'appareil se trouve dans la zone géographique précitée.

L'appareil peut être apte à être connecté à au moins un serveur, ladite mémoire pouvant contenir des informations envoyées par le serveur lors d'une connexion antérieure de l'appareil avec le serveur. Cette connexion antérieure peut avoir été réalisée au moyen d'une liaison filaire ou non. Dans le cas d'une liaison filaire, les informations stockées dans la mémoire peuvent contenir des *cookies* envoyés par un serveur, par exemple un site Internet.

Les informations stockées dans la mémoire de l'appareil peuvent comporter des indications sur la nature des sites, notamment Internet, visités dans le passé au moyen dudit appareil, et ces indications peuvent comporter : une identification du site, une adresse du site, une réponse à un questionnaire, l'heure et la date de connexion, le temps de connexion, la vitesse de connexion, l'adresse des pages visitées, la nature d'un mode de paiement utilisé, l'identité du fournisseur d'accès, le volume de données échangées.

Les informations mémorisées peuvent également comporter des indications sur la nature des opérations, notamment d'achat, effectuées avec l'appareil. Ces indications peuvent par exemple comporter l'adresse du site sur lequel l'achat a été effectué, une désignation du ou des produits achetés, la date de l'achat.

Les informations peuvent encore comporter des indications sur le ou les moyens de paiement utilisés avec l'appareil pour régler les achats. Ces indications peuvent par exemple comporter toute ou partie des informations relatives à un ordre de paiement envoyé dans le passé et autorisant un prélèvement du montant de l'achat sur un compte, par exemple un compte ouvert auprès d'un fournisseur d'accès à Internet ou d'un opérateur de téléphonie mobile.

Les informations stockées dans la mémoire peuvent être dépourvues de programme exécutable par l'appareil.

Les informations mémorisées peuvent également comporter un code capable de signaler si l'utilisateur de l'appareil est autorisé ou non à recevoir des appels dans certains lieux, par exemple les hôpitaux ou les salles de spectacle.

L'appareil peut comporter un écran et être choisi dans la liste non limitative suivante : un téléphone portable, un assistant personnel, un ordinateur portable, un appareil de type terminal Internet mobile.

Les informations envoyées à l'appareil peuvent comporter au moins un élément choisi dans la liste suivante : une image, des caractères alphanumériques, un lien vers un site Internet, un contenu multimédia transmis notamment par la technologie du *streaming.*

Dans une mise en oeuvre de l'invention, on commande la lecture d'informations dans la mémoire de l'appareil seulement après que l'on ait détecté une requête envoyée par l'appareil.

Dans un autre exemple de mise en oeuvre de l'invention, on lit les informations dans la mémoire de l'appareil indépendamment de la réception préalable d'une requête envoyée par l'appareil. Ainsi, la lecture peut être effectuée alors que l'appareil est en mode de veille, par exemple.

La lecture des informations stockées dans la mémoire de l'appareil peut en outre être indépendante des actions opérées par l'utilisateur sur l'appareil. Notamment lorsque ce dernier est un téléphone portable, la lecture de la mémoire peut s'effectuer que le téléphone soit en cours d'appel ou non.

La lecture des informations peut encore être déclenchée indépendamment de l'appui par l'utilisateur sur une touche de l'appareil. C'est le cas par exemple lorsque la lecture est déclenchée automatiquement par la détection de l'entrée dans une zone géographique prédéterminée d'un appareil portable.

La mémoire peut comporter un disque dur, un cédérom, une disquette ou une mémoire électronique, de type mémoire vive ou mémoire morte.

Dans une mise en oeuvre particulière de l'invention, on peut déterminer le temps de présence d'un appareil portable dans la zone géographique en fonction du contenu affiché sur le dispositif d'affichage. Ainsi, on peut évaluer par exemple le degré d'intérêt que porte le public à un contenu affiché, selon que la présence de l'appareil portable est détectée plus ou moins longtemps.

On peut également déterminer le temps de présence d'un appareil portable dans la zone géographique en fonction des informations lues dans la mémoire de l'appareil et éventuellement du contenu affiché. Ainsi, on peut déterminer par exemple le profil des personnes restant le plus longtemps dans la zone géographique parce que captivées par le contenu affiché et, par conséquent connaître le type de population sur lequel le contenu affiché à le plus d'impact. On peut de cette manière déterminer par exemple si le contenu affiché touche davantage les hommes ou les femmes, les jeunes ou les personnes plus âgées, ou des utilisateurs assidus ou occasionnels de leur appareil portable.

On peut également déterminer le nombre d'appareils portables détectés dans la zone géographique pendant une période prédéterminée, de manière à évaluer par exemple les heures d'affluence dans la zone géographique, et adapter par exemple la durée ou le contenu des informations affichées en conséquence.

Dans un exemple de mise en oeuvre de l'invention, on détermine, au moyen d'une caméra par exemple, la vitesse de déplacement des appareils dans la zone géographique, afin d'évaluer l'intérêt que portent les personnes présentes dans la zone géographique au contenu affiché, une personne étant susceptible de s'arrêter ou de ralentir si le contenu affiché l'intéresse.

On peut mémoriser toutes ou certaines des informations précitées et les utiliser dans un traitement statistique. On peut ensuite modifier éventuellement le contenu affiché en fonction des résultats du traitement statistique.

Le dispositif d'affichage peut être fixe.

En variante, on peut déplacer le dispositif d'affichage au moyen d'un véhicule et configurer le dispositif d'affichage de manière à ce qu'il soit visible par des piétons ou automobilistes situés dans le voisinage du véhicule.

Dans un exemple de mise en oeuvre de l'invention, on affiche sur le dispositif d'affichage des contenus publicitaires différents selon la localisation du véhicule. Grâce à cet aspect de l'invention, il est possible d'adapter l'information, notamment publicitaire, aux caractéristiques de la population habitant ou circulant dans chaque zone traversée par le véhicule.

Dans une mise en oeuvre particulière de l'invention, on peut utiliser pour renseigner le véhicule sur sa position un système de localisation par satellite tel que par exemple celui connu sous le nom de GPS.

Lorsque le véhicule évolue dans une ville, cette dernière est avantageusement divisée en différentes zones en fonction de la prépondérance de certaines caractéristiques socio-économiques au sein de la population y habitant ou y circulant, notamment son pouvoir d'achat, sa religion, son âge moyen, ses moeurs. L'affichage des différents contenus, notamment publicitaires, s'effectue alors en adéquation avec les caractéristiques de la population habitant ou circulant dans la zone traversée.

Au moins une partie des contenus, notamment publicitaires, peut être enregistrée sur un dispositif de stockage de données présent dans le véhicule.

En variante, ou additionnellement, au moins une partie des contenus, notamment publicitaires, est téléchargée depuis le véhicule. Dans ce dernier cas, les contenus, notamment publicitaires, peuvent être téléchargés pratiquement en temps réel, un contenu donné pouvant être téléchargé à l'approche ou à la traversée d'une zone dans laquelle il doit être diffusé.

De cette façon, les contenus, notamment publicitaires, peuvent être renouvelés et actualisés fréquemment.

Dans une mise en oeuvre particulière de l'invention, on affiche des contenus, notamment publicitaires, déterminés en fonction de l'heure dans la journée, la population d'une zone traversée pouvant varier dans le temps, par exemple si celle-ci est touristique ou est un quartier d'affaires.

En variante, ou additionnellement, on peut afficher des contenus, notamment publicitaires, différents en fonction de la vitesse du véhicule, pour tenir compte de la modification de la perception du contenu avec la vitesse.

En particulier, lorsque le véhicule est à l'arrêt, on peut afficher un contenu spécifique.

La durée d'affichage de chaque contenu peut également être déterminée en fonction de la vitesse du véhicule.

La direction de déplacement du véhicule par rapport à la circulation générale au voisinage du véhicule peut en outre influer sur les contenus, notamment publicitaires, à afficher.

On peut encore afficher des contenus, notamment publicitaires, différents en fonction de la densité de la circulation, pour tenir compte de l'influence du stress sur le comportement des personnes, par exemple.

Enfin, lorsque le véhicule est proche d'un magasin donné, on peut afficher sur le véhicule un contenu, notamment publicitaire, se rapportant aux produits ou services offerts dans ce magasin.

A cet effet, le magasin en question peut être muni, par exemple, d'une borne émettrice apte à signaler au véhicule sa proximité.

Dans une mise en oeuvre particulière de l'invention, on envoie à partir de bornes émettrices disposées sur le trajet du véhicule des signaux commandant l'affichage de différents contenus, notamment publicitaires, chaque contenu étant spécifique à une borne donnée.

Il est possible d'afficher avec un contenu, notamment publicitaire, une indication permettant aux personnes d'obtenir des informations supplémentaires sur l'objet du contenu affiché.

Une telle indication comporte avantageusement une adresse Internet.

Ainsi, toute personne percevant une publicité et intéressée par son objet peut, en se connectant sur le site Internet dont l'adresse est affichée, obtenir des informations supplémentaires sur le produit ou le service en question.

Dans ce cas, le transfert des données entre l'appareil et un serveur peut s'effectuer par exemple selon l'une des technologies dites WAP, GRPS, 3G, CDMA 2000 ou W-CDMA.

Dans une mise en oeuvre particulière de l'invention, on offre la possibilité à une personne apercevant un contenu, notamment publicitaire, de provoquer l'affichage d'une information supplémentaire sur le dispositif d'affichage du véhicule, par l'envoi d'une requête appropriée, notamment depuis un téléphone mobile ou un ordinateur de poche.

En variante, ou additionnellement, on peut transférer par radio à partir du véhicule des données concernant le contenu affiché vers un appareil situé à portée d'onde du véhicule, notamment un téléphone mobile ou un ordinateur de poche.

Dans ce cas, le transfert des données s'effectue de préférence selon la norme "Bluetooth", laquelle permet une portée d'une dizaine de mètres.

Dans une mise en oeuvre particulière de l'invention, on offre la possibilité aux personnes apercevant un contenu, notamment publicitaire, d'envoyer des informations au véhicule, par exemple au moyen d'un téléphone mobile ou d'un ordinateur portable, pour passer commande en direct et/ou envoyer leurs coordonnées.

L'invention a encore pour objet, selon un autre de ses aspects, un procédé pour afficher des informations, notamment publicitaires, sur un véhicule, caractérisé par le fait qu'il comporte les étapes suivantes :
- équiper le véhicule d'un dispositif d'affichage agencé pour être visible par des piétons ou automobilistes situés dans le voisinage du véhicule,
- afficher des contenus, notamment publicitaires, différents selon la localisation du véhicule.

L'invention a encore pour objet, selon un autre de ses aspects, un procédé pour afficher des informations, notamment publicitaires, sur un véhicule, caractérisé par le fait qu'il comporte les étapes suivantes :
- équiper le véhicule d'un dispositif d'affichage agencé pour être visible par des piétons ou automobilistes situés dans le voisinage du véhicule,
- afficher des contenus, notamment publicitaires, différents selon la localisation du véhicule,
- permettre à des personnes percevant un contenu, notamment publicitaire, d'envoyer des informations au véhicule, par exemple au moyen d'un téléphone mobile ou d'un ordinateur portable, pour passer commande en direct et/ou envoyer leurs coordonnées.

L'invention a encore pour objet un procédé pour afficher des informations, notamment publicitaires, sur un véhicule, caractérisé par le fait qu'il comporte les étapes suivantes :
- équiper le véhicule d'un dispositif d'affichage agencé pour être visible par des piétons ou automobilistes situés dans le voisinage du véhicule,
- afficher des contenus, notamment publicitaires, différents selon la localisation du véhicule,
- permettre à une personne apercevant le contenu, notamment publicitaire, de provoquer l'affichage d'informations supplémentaires sur le dispositif d'affichage du véhicule, par l'envoi d'une requête appropriée, notamment depuis un téléphone mobile ou un ordinateur de poche.

L'invention a encore pour objet un procédé pour afficher des informations, notamment publicitaires, sur un véhicule, caractérisé par le fait qu'il comporte les étapes suivantes :
- équiper le véhicule d'un dispositif d'affichage agencé pour être visible par des piétons ou automobilistes situés dans le voisinage du véhicule,
- afficher des contenus, notamment publicitaires, différents selon la localisation du véhicule,
- faire varier le contenu affiché en fonction de la vitesse du véhicule, notamment en faisant varier sa durée d'affichage et/ou la taille de l'image affichée.

L'invention a encore pour objet, selon un autre de ses aspects, un procédé caractérisé par le fait qu'il comporte les étapes suivantes :
- émettre une requête au moyen d'un appareil portable,
- localiser l'appareil portable lors de l'émission de la requête,
- recevoir la requête sur un véhicule comportant un dispositif d'affichage,
- afficher sur le dispositif d'affichage un contenu fonction d'au moins une information contenue dans une mémoire de l'appareil portable.

Le véhicule peut être par exemple un taxi et le dispositif d'affichage être fixé sur une portière du véhicule ou disposé à l'intérieur de celui-ci, par exemple.

Lorsqu'une personne appelle le taxi au moyen de l'appareil portable, une publicité fonction d'une information lue dans une mémoire de l'appareil portable peut être affichée. Cette publicité peut être ainsi choisie en fonction du profil du passager, ce qui en améliore l'impact. La langue de la publicité peut par exemple être choisie en fonction de la nationalité du possesseur du portable, déterminée à partir d'une information lue dans la mémoire de celui-ci.

Le véhicule recevant la requête peut être par exemple celui d'une flotte de véhicule, le plus proche géographiquement de l'appareil portable et disponible pour prendre des passagers.

L'invention a encore pour objet un dispositif pour l'envoi d'informations personnalisées à au moins une personne équipée d'un appareil portable ayant une mémoire et apte à échanger des informations par une liaison non filaire, ledit dispositif comportant :
- un dispositif d'affichage pour afficher des informations, notamment publicitaires,
- un dispositif de lecture permettant de lire au moins une information contenue dans la mémoire pendant la présence de l'appareil dans une zone géographique, par exemple une zone géographique s'étendant au moins dans le champ de lecture visuelle des informations affichées sur le dispositif d'affichage,
- un émetteur apte à envoyer à l'appareil des informations personnalisées dont le contenu est fonction de ladite au moins une information lue dans la mémoire et d'au moins une information affichée sur le dispositif d'affichage.

Le dispositif peut comporter en outre un détecteur pour détecter la présence de l'appareil portable dans le champ de lecture visuelle des informations affichées sur le dispositif d'affichage.

Le dispositif d'affichage peut être fixe.

En variante, le dispositif d'affichage est agencé pour équiper un véhicule et être aisément visible par des piétons ou automobilistes situés dans le voisinage du véhicule.

Le dispositif précité peut comporter un dispositif de contrôle du dispositif d'affichage, permettant d'afficher des contenus, notamment publicitaires, différents en fonction de la position géographique du véhicule.

Dans une réalisation particulière, le dispositif d'affichage comporte au moins un écran vidéo, par exemple à plasma, à tube cathodique ou à cristaux liquides.

En variante, ou additionnellement, le dispositif d'affichage comporte au moins un écran à micro-capsules.

Le dispositif d'affichage peut encore comporter au moins un écran déroulant.

De préférence, le dispositif comporte un dispositif de localisation par satellite, par exemple le système de localisation connu sous le nom de GPS.

Le dispositif peut comporter un support optique, électronique ou magnétique sur lequel différents contenus, notamment publicitaires, peuvent être ou sont enregistrés, le dispositif de contrôle étant agencé pour commander l'affichage d'un contenu donné sur le dispositif d'affichage lors de la réception d'un signal de commande spécifique.

Lorsque le dispositif d'affichage équipe un véhicule, ce signal de commande spécifique peut être émis de manière automatique par un dispositif de localisation placé dans le véhicule.

En variante, le signal de commande spécifique peut être émis depuis l'extérieur du véhicule, par exemple par une ou plusieurs bornes émettrices disposées en un ou plusieurs emplacements prédéterminés sur le trajet du véhicule.

Avantageusement, le dispositif comporte un dispositif de réception permettant de télécharger un contenu, notamment publicitaire.

Les contenus publicitaires diffusés peuvent être muets, le dispositif à embarquer pouvant être dépourvu de moyen audio.

Avantageusement, le dispositif d'affichage comprend au moins un écran de dimensions suffisantes pour être visible par les automobilistes ou les piétons dans la zone géographique précitée, dans un rayon d'au moins cinq mètres de préférence, et avantageusement d'au moins dix mètres.

Un tel écran a une surface de préférence comprise entre 0,1 m² et 15 m² et de préférence encore entre 1 m² et 10 m².

Lorsque le dispositif d'affichage équipe un véhicule, le dispositif de contrôle peut être agencé pour modifier un contenu, notamment publicitaire, affiché en fonction de la vitesse du véhicule, afin par exemple d'afficher lorsque le véhicule circule rapidement des informations clairement visibles malgré la vitesse et d'afficher lorsque le véhicule circule plus lentement un contenu plus dense, nécessitant une attention soutenue pour être perçu dans le détail.

L'émetteur peut fonctionner par exemple selon la norme "Bluetooth".

Le dispositif peut également comporter un récepteur apte à recevoir un signal émis par un téléphone mobile ou un ordinateur portable en vue de passer commande ou de demander l'affichage d'informations supplémentaires, par exemple.

Le dispositif de contrôle précité peut, dans une mise en oeuvre particulière de l'invention, être agencé pour ne permettre l'affichage que de contenus répondant à des conditions prédéterminées.

Lorsque le dispositif d'affichage équipe un véhicule, le conducteur peut, s'il le souhaite, n'autoriser par exemple que la diffusion de contenus publicitaires portant sur un ou plusieurs sujets prédéterminés, en fonction de ses propres convictions politiques, morales ou religieuses par exemple.

Dans une mise en oeuvre particulière de l'invention, le dispositif comporte au moins un capteur vidéo relié à un dispositif de traitement d'images permettant de comptabiliser le nombre de regards posés sur l'écran et le temps d'observation de celui-ci, ou un compteur permettant de mesurer le nombre de requêtes adressées au véhicule par l'intermédiaire de l'appareil portable, par exemple un téléphone mobile ou un ordinateur portable.

Le dispositif de contrôle peut encore être apte à sélectionner l'affichage de contenus, notamment publicitaires, en fonction d'émetteurs ambiants, tels que des téléphones mobiles, notamment en fonction de la reconnaissance des abonnements auxquels ont souscrit les propriétaires de téléphones mobiles se trouvant dans la zone , géographique précitée.

Le dispositif de contrôle peut encore être relié à des moyens de détection de l'approche d'un piéton et/ou d'un automobiliste permettant de déclencher l'affichage d'un contenu, notamment publicitaire.

Le dispositif de contrôle peut encore être relié à un capteur de luminosité ambiante permettant d'adapter la luminosité et/ou le contraste de l'écran à cette luminosité ambiante.

L'invention a encore pour objet, selon un autre de ses aspects, un dispositif à embarquer pour afficher des informations, notamment publicitaires, sur un véhicule, caractérisé par le fait qu'il comporte :
- un dispositif d'affichage agencé pour être aisément visible par des piétons ou automobilistes situés dans le voisinage du véhicule,
- un dispositif de contrôle du dispositif d'affichage, permettant d'afficher des contenus, notamment publicitaires, différents en fonction de la position géographique du véhicule. '

La présente invention a encore pour objet, selon un autre de ses aspects, un système permettant l'affichage d'informations, notamment publicitaires, caractérisé par le fait qu'il comporte :
- au moins un véhicule équipé d'un dispositif d'affichage agencé pour être aisément visible par des piétons ou automobilistes situés dans le voisinage du véhicule,
- un dispositif de contrôle de ce dispositif d'affichage, permettant d'afficher de manière automatique des contenus, notamment publicitaires, différents en fonction de la position géographique du véhicule,
- au moins un émetteur externe au véhicule, permettant au dispositif de contrôle du véhicule de commander l'affichage d'un contenu, notamment publicitaire, différent suite à un changement de position du véhicule,
- au moins un récepteur apte à recevoir un signal émis par un téléphone mobile ou un ordinateur portable en vue de passer commande ou de demander l'affichage d'informations supplémentaires.

Dans une réalisation particulière, l'émetteur externe est à bord d'un satellite.

Dans une autre réalisation particulière, l'émetteur externe est un relais pour réseau de téléphonie mobile.

L'émetteur externe peut encore être une borne émettrice locale, spécifique au système.

Avantageusement, le système comporte en outre un serveur Internet ou vocal permettant à une personne ayant observé un contenu, notamment publicitaire, d'obtenir un complément d'information sur celui-ci.

Dans une réalisation particulière, le système comporte un émetteur externe au véhicule, permettant d'envoyer au véhicule différents contenus à afficher.

L'invention a encore pour objet, selon un autre de ses aspects, un procédé pour empêcher sélectivement des utilisateurs d'appareils portables tels que des téléphones portables, par exemple, d'utiliser leur appareil dans certains lieux, par exemple une salle de spectacle ou un hôpital, tout en permettant à certains utilisateurs prioritaires tels que des médecins ou policiers de recevoir des appels urgents, le cas échéant.

Ce procédé comporte les étapes suivantes :
- détecter la présence d'un appareil portable dans une zone géographique prédéterminée,
- lire une information dans une mémoire de l'appareil, cette information permettant de déterminer si l'appareil portable est prioritaire ou non,
- si l'appareil portable est non prioritaire, engager une action permettant d'empêcher la réception d'appels,
- si l'appareil est prioritaire, autoriser la réception des appels.

L'action engagée lorsque l'appareil portable est non prioritaire peut être l'envoi d'une information provoquant l'affichage sur un écran de l'appareil d'un message indiquant que la réception des appels est inhibée ou l'envoi d'une information provoquant l'arrêt de l'appareil.

L'information envoyée à l'appareil portable peut dépendre du contenu affiché sur un dispositif d'affichage, par exemple un écran de cinéma. Ainsi, avant que le film ne commence, l'information envoyée à l'appareil portable non prioritaire peut être un message signalant que la réception des appels sera inhibée durant le film à venir. Lorsque le film va commencer, l'information envoyée à l'appareil portable provoque l'impossibilité de recevoir des appels pour les appareils non prioritaires.

D'autres caractéristiques et avantages de la présente invention ressortiront à la lecture de la description détaillée qui va suivre, d'exemples de mise en oeuvre non limitatifs, et à l'examen du dessin annexé, sur lequel :
- la figure 1 illustre de manière schématique le découpage d'une ville en différentes zones et le repérage d'un véhicule dans cette ville grâce à un système de localisation par satellite,
- la figure 2 illustre le téléchargement de contenus publicitaires depuis le véhicule,
- la figure 3 illustre l'utilisation de bornes spécifiques,
- la figure 4 représente de manière schématique un véhicule publicitaire équipé d'un dispositif d'affichage conforme à l'invention,
- la figure 5 représente de manière schématique une voiture équipée d'un dispositif d'affichage conforme à l'invention,
- la figure 6 représente de manière schématique un bus équipé d'un dispositif d'affichage conforme à l'invention,
- la figure 7 illustre l'utilisation d'un téléphone mobile par une personne située dans le voisinage du véhicule pour obtenir des informations complémentaires sur la publicité affichée,
- la figure 8 illustre la modification du contenu affiché en fonction d'une requête envoyée depuis un téléphone mobile situé dans le voisinage du véhicule,
- la figure 9 illustre le téléchargement de données émises par le véhicule vers un téléphone mobile d'une personne située dans le voisinage du véhicule,
- la figure 10 illustre le téléchargement de données émises par le véhicule vers un téléphone mobile d'une personne située dans le voisinage du véhicule, puis l'échange de données entre le téléphone mobile et un serveur,
- la figure 11 représente de manière schématique un dispositif pour la mise en oeuvre du procédé,
- la figure 12 représente de manière schématique une variante du dispositif,
- la figure 13 est un tableau illustrant l'association de chaque contenu publicitaire à une ou plusieurs zones géographiques,
- la figure 14 représente schématiquement et partiellement un dispositif d'affichage fixe et un téléphone mobile apte à échanger des informations, et
- la figure 15 illustre très schématiquement et partiellement différents éléments d'un appareil portable tel qu'un téléphone mobile.

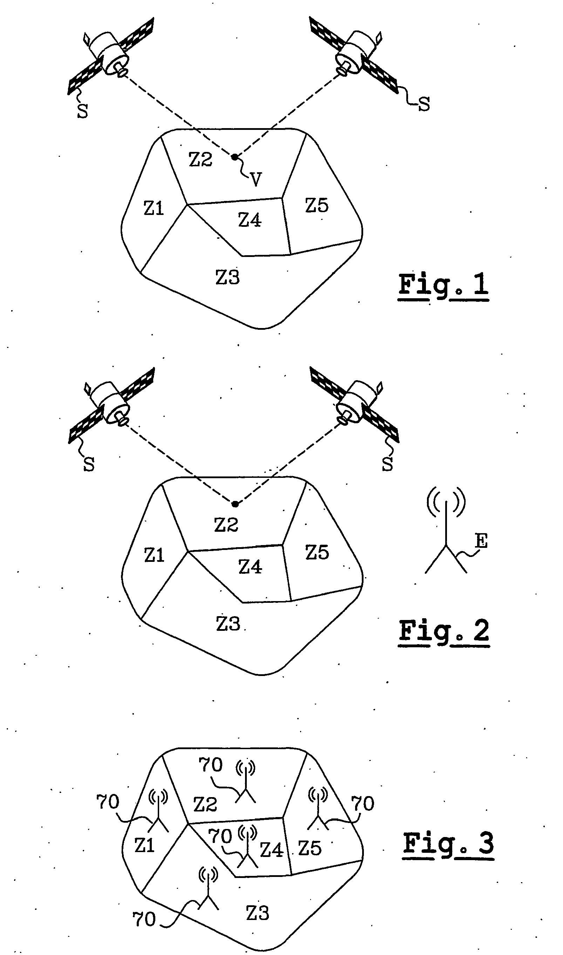

On a représenté sur la figure 1 de manière schématique différentes zones Z₁, Z₂, ... Z₅ d'une ville, le découpage étant effectué selon des critères socio-économiques, la zone Z₁ correspondant par exemple aux quartiers les plus chics, la zone Z₂ étant habitée par exemple majoritairement par une population à faible revenu, la zone Z₃ par les classes moyennes, la zone Z₄ étant un quartier d'affaires et la zone Z₅ étant un quartier habité majoritairement par des étudiants.

Le nombre de zones a été fixé à cinq à titre d'exemple uniquement et il va de soi que ce nombre peut être différent sans que l'on sorte du cadre de la présente invention.

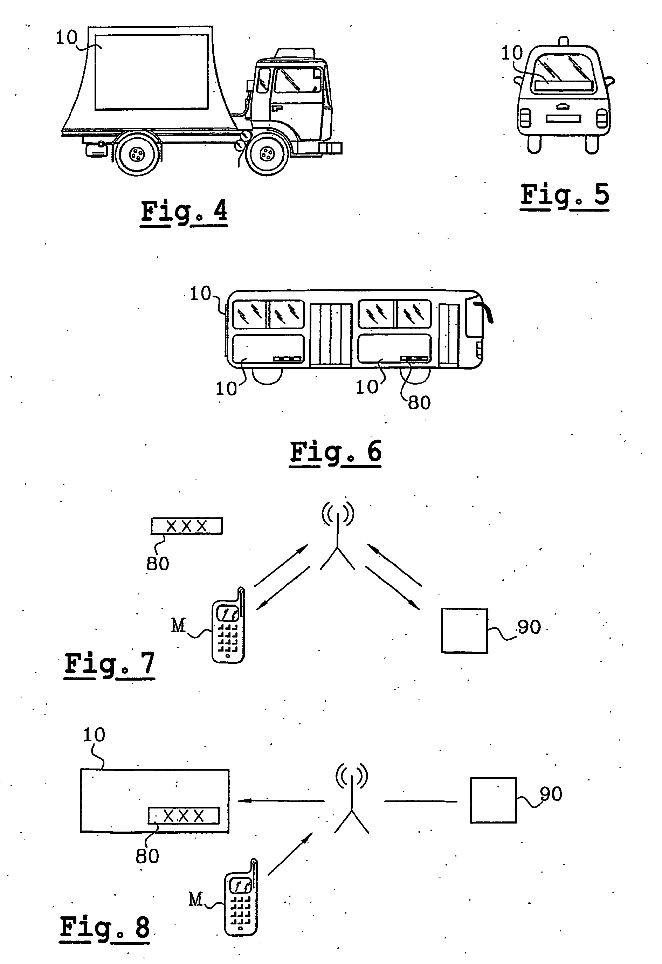

On a schématisé par un point la localisation d'un véhicule V, ce dernier étant par exemple l'un des véhicules représentés aux figures 4 à 6.

On a également représenté sur la figure 1 des satellites S faisant partie d'un système de localisation connu sous la dénomination GPS et permettant le repérage du véhicule V.

Le véhicule V comporte un dispositif d'affichage 10 qui peut se présenter de diverses manières, par exemple sous la forme d'un ou de plusieurs écran(s) géant(s) lorsque le véhicule est un camion, comme illustré sur la figure 4, d'un bandeau lumineux lorsque le véhicule est un taxi comme illustré sur la figure 5, ou de plusieurs écrans de taille moyenne lorsque le véhicule est un bus, comme illustré sur la figure 6.

Les écrans peuvent être des écrans vidéo à tube cathodique, à plasma ou à cristaux liquides, ou utiliser une technologie à microcapsules, telle que décrite par exemple dans le brevet US 6,017,584.

Les écrans peuvent encore être des écrans déroulants tels que ceux couramment utilisés par les publicitaires à poste fixe.

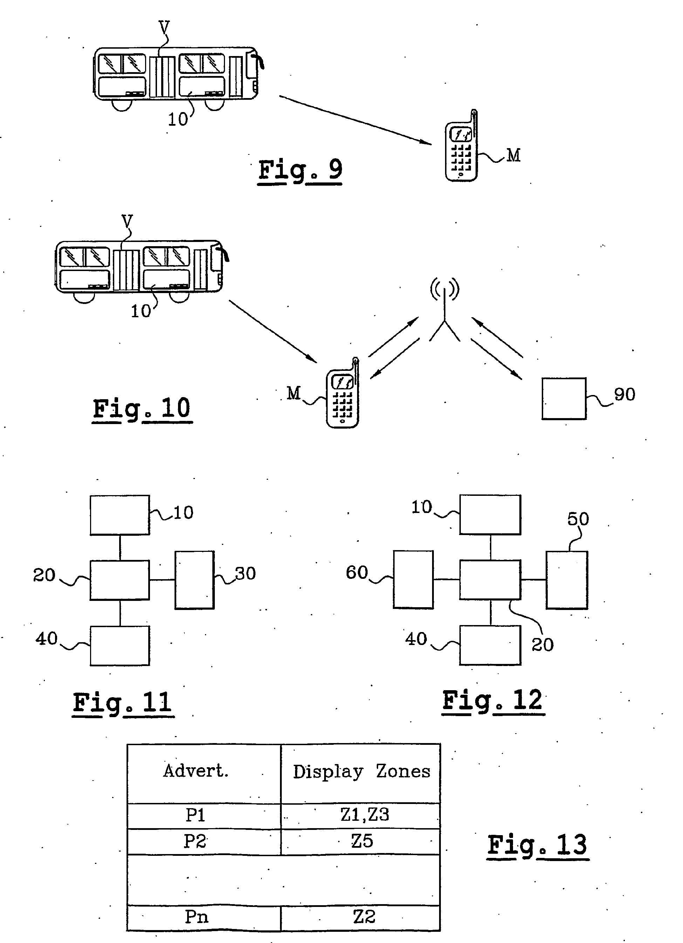

Le dispositif d'affichage 10 est relié à des moyens de contrôle 20, représentés schématiquement sur la figure 11, agencés pour modifier le contenu affiché en fonction de la position du véhicule V, conformément à l'invention.

Les moyens de contrôle 20 sont reliés à un dispositif de stockage de données 30 tel qu'un disque dur, un disque optique, une mémoire électronique ou une bande magnétique, et à un dispositif de localisation 40 délivrant au dispositif de contrôle 20 une information sur la position du véhicule grâce aux satellites S.

En fonction des informations fournies par le dispositif de localisation 40, le dispositif de contrôle 20 sélectionne dans les moyens de stockage 30 un contenu publicitaire déterminé.

A titre d'exemple, lorsque le dispositif de localisation 40 indique au dispositif de contrôle 20 que le véhicule V se situe dans la zone Z₁ des quartiers chics, le dispositif de contrôle sélectionne dans les moyens de stockage 30 un contenu publicitaire adapté au pouvoir d'achat de la population habitant cette zone Z₁, concernant par exemple des produits de luxe.

Le programme de sélection des contenus publicitaires en fonction de la localisation du véhicule est défini à l'avance, dans l'exemple décrit.

Lorsque le dispositif de localisation 40 indique au dispositif de contrôle 20 que le véhicule V se situe dans la zone Z₂ occupée majoritairement par des populations à faible pouvoir d'achat, le dispositif de contrôle 20 sélectionne dans les moyens de stockage 30 un contenu publicitaire adapté, concernant par exemple des biens de grande consommation.

A chaque contenu publicitaire P₁, ..., P₁₁ chargé dans les moyens de stockage 30 est associée une information concernant les zones dans lesquelles il doit être affiché, comme illustré sur la figure 13.

Dans l'exemple de la figure 11, les moyens de stockage 30 sont à bord du véhicule et se déplacent avec celui-ci.

On ne sort pas du cadre de la présente invention lorsque l'on équipe le véhicule d'un récepteur permettant le téléchargement des contenus publicitaires.

A titre d'exemple, on a représenté sur la figure 12 un dispositif embarqué dans lequel les moyens de stockage 30 ont été remplacés par un récepteur 50, lequel permet de télécharger, en temps réel ou avant le départ du véhicule par exemple, différents contenus publicitaires. Le dispositif embarqué comporte avantageusement dans ce cas une mémoire tampon permettant de stocker les contenus téléchargés en attente de leur envoi au dispositif d'affichage 10.

Le téléchargement s'effectue par exemple grâce à un émetteur externe E capable de couvrir toutes les zones Z₁, ..., Z₅ dans lesquelles le véhicule évolue, comme illustré sur la figure 2.

Le dispositif embarqué comporte avantageusement un émetteur 60 permettant d'envoyer des données vers un téléphone mobile ou un ordinateur de poche situé dans le voisinage du véhicule, comme cela sera précisé plus loin.

Dans les exemples qui viennent d'être décrits, le véhicule connaît sa position grâce aux satellites S.

On ne sort pas du cadre de la présente invention lorsque la localisation du véhicule s'effectue autrement, par exemple grâce à un système de localisation faisant intervenir des relais de téléphonie mobile ou encore grâce à un calculateur embarqué enregistrant les mouvements du véhicule et connaissant son itinéraire.

Un tel calculateur embarqué peut être relié à une boussole électronique et/ou à un compteur kilométrique.

Il peut encore être relié à une centrale inertielle, par exemple.

On peut encore utiliser un système de localisation spécifique comportant par exemple une pluralité de bornes émettrices 70 disposées dans les différentes zones Z₁ à Z₅ et émettant chacune un signal spécifique, comme illustré à la figure 3.

La portée des bornes 70 est limitée, de manière à ce qu'un véhicule V, se trouvant dans la zone Z₁ par exemple, ne capte que le signal émis par la borne 70 correspondante.

Le dispositif de localisation 40 comporte alors un récepteur capable de recevoir les signaux émis par les bornes 70 et de les décoder afin de déterminer la zone Z₁,..., Z₅ dans laquelle se situe le véhicule V.

Dans les exemples qui viennent d'être décrits, le dispositif d'affichage est embarqué sur un véhicule.

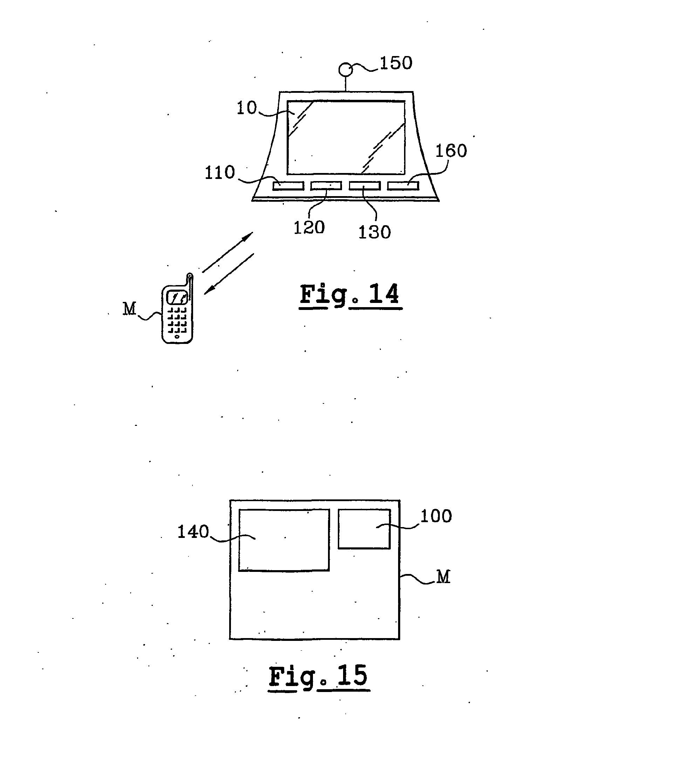

On ne sort pas du cadre de la présente invention lorsque le dispositif d'affichage est fixe. On a représenté à titre d'exemple sur la figure 14 un dispositif d'affichage fixe 10 placé dans un lieu public tel qu'un centre commercial, un aéroport ou encore dans la rue.

Selon un aspect de l'invention, on affiche sur le dispositif d'affichage 10 en même temps qu'un contenu publicitaire un identifiant 80 permettant à un utilisateur d'obtenir des informations complémentaires sur la publicité en cours.

L'identifiant est constitué par exemple par un numéro de téléphone. En composant ce numéro sur son téléphone mobile M, un observateur peut obtenir des informations sur la publicité en cours, comme illustré sur la figure 7, ces informations étant envoyées par un serveur 90.

L'échange des données entre le téléphone mobile M et le serveur 90 peut s'effectuer par exemple selon l'une des technologies dites WAP, GPRS, 3G, CDMA 2000 ou W-CDMA.

Dans la variante illustrée sur la figure 8, les informations complémentaires sont envoyées non pas au téléphone mobile M mais au dispositif d'affichage 10.

Dans une autre variante, illustrée à la figure 9, on émet, par exemple au moyen de l'émetteur 60 décrit en référence à la figure 12, simultanément à l'affichage d'un contenu publicitaire sur le dispositif d'affichage 10, des informations capables d'être captées par un téléphone mobile M situé dans le voisinage du véhicule.

Ces informations sont émises par exemple selon la norme "Bluetooth".

Ainsi, l'utilisateur n'a qu'à pointer son téléphone mobile M en direction du véhicule pour recevoir un complément d'information concernant la publicité affichée.

Le dispositif d'affichage peut encore être relié à un récepteur apte à recevoir une requête émise par un téléphone mobile ou par un ordinateur portable d'une personne située dans le voisinage du dispositif d'affichage.

Une telle requête peut correspondre par exemple à un ordre d'achat d'un produit correspondant à la publicité affichée.

Une personne située dans l'environnement du dispositif d'affichage, c'est-à-dire du véhicule lorsque le dispositif d'affichage est monté sur un véhicule, peut encore transmettre ses coordonnées au véhicule directement depuis son téléphone mobile, en transmettant par exemple un numéro d'identification du téléphone mobile vers un récepteur du véhicule.

Eventuellement, comme illustré sur la figure 10, le véhicule V transmet au téléphone mobile M une adresse d'un réseau informatique ou de téléphonie, par exemple l'adresse d'un site Internet.

En connectant ensuite le téléphone mobile M à cette adresse, son utilisateur peut recevoir d'un serveur 90 un complément d'information sur la publicité en question.

Le téléphone mobile M ou l'appareil portable le remplaçant peut comporter, comme cela est illustré sur la figure 15, une mémoire 100 apte à mémoriser des informations, notamment des informations envoyées par un serveur.

Ces informations peuvent comporter par exemple des éléments de texte constitués uniquement de caractères alphanumériques, ne constituant pas un programme exécutable par le téléphone.

Lorsque le téléphone mobile M est remplacé par un ordinateur portable par exemple capable d'être connecté, notamment par une liaison filaire, à un serveur Internet, ces éléments de texte peuvent comporter des *cookies.*

La mémoire 100 peut comporter un disque dur, un cédérom, une disquette ou encore une mémoire électronique.

Les éléments de texte précités sont susceptibles d'être envoyés vers 1a mémoire 100 à chaque fois que le téléphone mobile M est connecté à un serveur, qu'il soit dans 1a zone géographique associée au dispositif d'affichage 10 ou non.

Ces éléments de texte peuvent contenir des indications sur la nature des sites, notamment Internet, visités dans le passé au moyen du téléphone mobile M. Ces indications peuvent contenir par exemple l'adresse d'un site, le temps de connexion, la vitesse de connexion, et les liens vers les pages visitées.

Ces éléments de texte peuvent également comporter des indications sur la nature d'opérations, notamment d'achat, effectuées avec l'appareil. Ces indications peuvent par exemple contenir l'adresse du site sur lequel l'achat a été effectué, une désignation du ou des produits achetés et la date de l'achat.

Les éléments de texte peuvent encore comporter des indications sur le ou les moyens de paiement utilisés avec l'appareil pour régler les achats. Ces indications peuvent se rapporter à un ordre de paiement envoyé dans le passé et autorisant de porter le montant de l'achat sur la facture téléphonique de l'utilisateur.

Le dispositif d'affichage 10 peut être relié, comme cela est illustré sur la figure 14, à un détecteur 110 permettant de détecter la présence d'un ou plusieurs téléphones mobiles M situés dans une zone géographique prédéterminée.

Le détecteur 110 peut être relié à un émetteur-récepteur 120, lequel est apte à envoyer vers un téléphone mobile M détecté par le détecteur 110 un ordre de lecture des éléments de texte contenus dans la mémoire 100, après réception d'une requête provenant de ce téléphone.

En variante, l'émetteur-récepteur 120 peut être apte à envoyer vers un téléphone mobile un ordre de lecture des éléments de texte contenus dans la mémoire de ce téléphone sans même qu'il y ait réception préalable d'une requête provenant de ce téléphone. Ainsi, l'émetteur-récepteur 120 peut recueillir des informations sur un téléphone même lorsque celui-ci est en mode de veille ou en cours d'appel.

L'émetteur-récepteur 120 peut être relié à une unité de traitement 130 apte à déterminer, en fonction des informations contenues dans la mémoire 100 et reçues par l'émetteur-récepteur 120, le type d'informations à envoyer au téléphone M.

L'unité de traitement 130 peut par exemple être apte à déterminer à partir des informations lues dans la mémoire du téléphone, un profil de l'utilisateur du téléphone. Ce profil peut par exemple comporter des indications sur les centres d'intérêts de l'utilisateur, ou encore sur l'utilisation que celui-ci fait de son téléphone, par exemple la fréquence de connexion à un réseau informatique, tel qu'Internet.

Ce profil peut également comporter des indications sur des achats effectués au moyen du téléphone ainsi que le ou les modes de paiement habituellement utilisés par l'utilisateur.

Ainsi, l'émetteur-récepteur 120 peut envoyer vers le téléphone mobile M de cet utilisateur des informations se rapportant au contenu affiché sur le dispositif d'affichage 10, et fonction du profil de l'utilisateur du téléphone, de sorte que les informations envoyées au téléphone M sont des informations personnalisées. Autrement dit, il est plus facile d'envoyer vers un téléphone M des informations susceptibles d'intéresser le possesseur de ce téléphone.

Selon un autre aspect de l'invention, lorsqu'une personne souhaite acheter un produit présenté sur le dispositif d'affichage 10, elle peut, au moyen de son téléphone, envoyer un ordre d'achat, auquel cas l'unité de traitement 130 détermine à partir des informations lues dans la mémoire du téléphone, le mode de paiement que privilégie cette personne et lui propose d'appliquer ce mode de traitement à la transaction en cours.

Ainsi, lorsque les informations lues dans la mémoire indiquent une habitude de la personne à payer en débitant son compte téléphonique, l'unité de traitement 130 peut proposer, voire commander directement le paiement du produit par débit du compte téléphonique.

Les informations envoyées par l'émetteur-récepteur 120 peuvent comporter une image, des caractères alphanumériques, un lien vers un site Internet, un contenu multimédia, tel que de la musique ou un film, transmis notamment par la technologie du *streaming.*

Le téléphone peut comporter un écran 140 pour l'affichage des images reçues.

L'émetteur-récepteur 120 peut être relié à un espace de stockage 160 permettant de mémoriser les informations lues sur les téléphones mobiles M.

L'émetteur-récepteur 120 peut être agencé de manière à déterminer le temps de présence d'un téléphone mobile dans une zone géographique prédéterminée, par exemple celle permettant de lire les informations affichées sur le dispositif d'affichage, en fonction de chaque contenu affiché sur le dispositif d'affichage, et transférer ces informations vers l'espace de stockage 160.

L'émetteur-récepteur 120 peut également être apte à déterminer le temps de présence des téléphones portables dans une zone géographique prédéterminée en fonction des informations lues dans la mémoire de ces téléphones portables.

Le détecteur 110 peut être agencé de manière à déterminer le nombre de portables présents dans une zone géographique prédéterminée pendant une période donnée et envoyer ces informations vers l'espace de stockage 160.

On peut encore équiper le dispositif d'affichage avec une caméra 150 apte à déterminer la vitesse de déplacement des portables dans la zone géographique en fonction du contenu affiché et envoyer ces informations vers l'espace de stockage 160.

Les informations contenues dans l'espace de stockage 160 peuvent être utilisées afin de réaliser un traitement statistique.

Ce traitement statistique peut viser à évaluer l'intérêt des personnes passant dans la zone géographique pour un contenu affiché prédéterminé, ainsi que le type de population s'intéressant le plus au contenu affiché.

On peut ainsi modifier, le cas échéant, le contenu affiché afin d'avoir un impact maximum sur les personnes susceptibles de lire les informations diffusées par le dispositif d'affichage.

En revenant à l'exemple décrit en référence aux figures 11 et 12, les moyens de contrôle 20 du dispositif d'affichage 10 peuvent être agencés pour calculer la vitesse du véhicule V et modifier le contenu publicitaire affiché en conséquence.

Par exemple, si le véhicule évolue lentement ou est à l'arrêt, le contenu publicitaire affiché peut comporter des détails nécessitant, pour être perçus entièrement, une attention soutenue.

Lorsque le véhicule V évolue à grande vitesse, le contenu affiché ne comportera plus de tels détails et sera adapté à une perception par des personnes ne disposant que de très peu de temps pour observer le dispositif d'affichage 10.

La connaissance de la vitesse de déplacement du véhicule V peut également être utile pour effectuer une sélection supplémentaire parmi les contenus publicitaires à afficher, afin de tenir compte par exemple du fait que les automobilistes peuvent être plus réceptifs à une publicité d'un type donné lorsqu'ils sont coincés dans les embouteillages.

Bien entendu, l'invention n'est pas limitée aux exemples de mise en oeuvre qui viennent d'être décrits.

En particulier, le dispositif d'affichage peut équiper d'autres véhicules que ceux décrits en référence aux figures 4 à 6, notamment des métros, trains, tramways, voire des bateaux.

Les téléphones mobiles décrits en référence aux figures 7 à 10 peuvent être remplacés par d'autres appareils mobiles tels que des ordinateurs de poche.

Les contenus affichés peuvent être des informations non publicitaires.

Le dispositif embarqué à bord du véhicule peut permettre au conducteur ou au propriétaire de celui-ci de ne permettre l'affichage que de contenus répondant à des conditions prédéterminées.

Le véhicule peut être équipé de moyens de détection de l'approche d'un piéton ou d'un automobiliste permettant de déclencher l'affichage d'un contenu, notamment publicitaire.

Le véhicule peut également être équipé d'un capteur de luminosité ambiante, permettant de régler la luminosité et/ou le contraste de l'écran de manière à optimiser la visibilité de celui-ci.

Le véhicule peut encore comporter au moins un capteur vidéo relié à un dispositif de traitement d'images, permettant de comptabiliser le nombre de regards posés sur l'écran et la durée d'observation des personnes en fonction des différents contenus, notamment publicitaires, affichés.

En variante, ou additionnellement, le véhicule peut comporter un compteur permettant de mesurer le nombre de requêtes adressées au véhicule par l'intermédiaire d'un téléphone mobile ou d'un ordinateur portable.

Le véhicule peut comporter des moyens aptes à sélectionner l'affichage de contenus, notamment publicitaires, en fonction d'émetteurs ambiants, tels que des téléphones -mobiles, notamment après reconnaissance des abonnements auxquels ont souscrit les propriétaires de téléphones mobiles se trouvant dans le voisinage du véhicule.

On peut ainsi adapter au mieux les contenus publicitaires affichés en fonction des personnes situées dans le voisinage du véhicule.

## Revendications

1. Procédé pour l'envoi d'informations personnalisées à au moins une personne équipée d'un appareil portable (M) ayant une mémoire (100) et apte à échanger des informations par une liaison non filaire ou pour la lecture d'informations mémorisées dans ladite mémoire, ledit procédé comportant les étapes suivantes :
- afficher des informations au moyen d'au moins un dispositif d'affichage (10) distinct de l'appareil portable et permettant d'afficher des images différentes,
- détecter la présence dudit appareil (M) dans une zone géographique,
- pendant la présence dudit appareil dans ladite zone géographique, lire au moins une information dans la mémoire de l'appareil, cette information ayant été mémorisée lors d'une utilisation antérieure de l'appareil ou permettant d'identifier l'appareil,
- envoyer à l'appareil des informations personnalisées dont le contenu est fonction de ladite au moins une information lue dans la mémoire et d'au moins une information affichée sur le dispositif d'affichage et/ou mémoriser les informations lues dans les mémoires des appareils présents dans ladite zone géographique entre deux instants prédéterminés.

2. Procédé selon la revendication 1, **caractérisé par le fait que** la zone géographique est fonction de l'emplacement du dispositif d'affichage (10).

3. Procédé selon l'une des revendications précédentes, **caractérisé par le fait que** la mémoire (100) de l'appareil est apte à échanger des informations par une liaison non filaire avec un émetteur et/ou un récepteur (110) lorsque l'appareil se trouve dans ladite zone géographique.

4. Procédé selon l'une quelconque des revendications précédentes, **caractérisé par le fait que** l'appareil est apte à être connecté à au moins un serveur, ladite mémoire (100) pouvant contenir des informations envoyées par le serveur lors d'une connexion antérieure de l'appareil avec ledit serveur.

5. Procédé selon l'une quelconque des revendications précédentes, **caractérisé par le fait que** l'appareil portable est choisi dans la liste suivante : un téléphone mobile (M), un assistant personnel, un ordinateur portable, notamment un appareil de type terminal Internet mobile.

6. Procédé selon l'une quelconque des revendications précédentes, **caractérisé par le fait que** l'on commande la lecture d'informations stockées dans la mémoire (100) seulement après que l'on ait détecté une requête envoyée par l'appareil (M).

7. Procédé selon l'une quelconque des revendications précédentes, **caractérisé par le fait que** l'on détermine le temps de présence d'un appareil portable dans la zone géographique en fonction des informations lues dans la mémoire de l'appareil et éventuellement du contenu affiché.

8. Procédé selon l'une quelconque des revendications précédentes, **caractérisé par le fait que** le dispositif d'affichage est fixe, et constitue par exemple un panneau publicitaire.

9. Procédé selon l'une quelconque des revendications 1 à 8, **caractérisé par le fait que** l'on déplace le dispositif d'affichage au moyen d'un véhicule et que l'on configure le dispositif d'affichage de manière à ce qu'il soit visible par des piétons ou automobilistes situés dans le voisinage du véhicule.

10. Procédé selon la revendication précédente, **caractérisé par le fait que** l'on affiche sur le dispositif d'affichage des contenus publicitaires différents selon la localisation du véhicule.

11. Procédé selon la revendication 10, le véhicule évoluant en ville, **caractérisé par le fait que** l'on divise la ville en différentes zones (Z₁,..., Z₅) en fonction de la prépondérance de certaines caractéristiques socio-économiques au sein de la population y habitant ou y circulant, notamment son pouvoir d'achat, sa religion, son âge moyen, ses moeurs, et **par le fait que** l'affichage des différents contenus publicitaires s'effectue en adéquation avec les caractéristiques de la population habitant ou circulant dans la zone traversée.

12. Procédé selon l'une quelconque des revendications 9 à 11, **caractérisé par le fait que** l'on envoie à partir de bornes émettrices (70) disposées sur le trajet du véhicule des signaux -commandant l'affichage de différents contenus, notamment publicitaires, chaque contenu, notamment publicitaire, étant spécifique à une ou plusieurs bornes données.

13. Procédé selon l'une quelconque des revendications précédentes, **caractérisé par le fait que** l'on affiche avec un contenu, notamment publicitaire, une indication (80) permettant aux personnes d'obtenir des informations supplémentaires sur l'objet du contenu affiché et/ou de passer commande, notamment d'un produit, en direct et/ou d'envoyer leurs coordonnées.

14. Procédé selon l'une quelconque des revendications précédentes, **caractérisé par le fait que** l'on transfère par radio des données concernant le contenu affiché vers l'appareil portable.

15. Dispositif pour l'envoi d'informations personnalisées à au moins une personne équipée d'un appareil portable ayant une mémoire (100) et apte à échanger des informations par une liaison non filaire, ledit dispositif étant **caractérisé par le fait qu'**il comporte :
- un dispositif d'affichage pour afficher des informations, notamment publicitaires,
- un dispositif de lecture permettant de lire au moins une information contenue dans ladite mémoire pendant la présence dudit au moins un appareil dans une zone géographique,
- un émetteur apte à envoyer à l'appareil des informations personnalisées dont le contenu est fonction de ladite au moins une information lue dans la mémoire et d'au moins une information affichée sur le dispositif d'affichage.

16. Dispositif selon l'une des deux revendications précédentes, **caractérisé par le fait que** le dispositif d'affichage est fixe.

17. Dispositif selon l'une des revendications 15 et 16, **caractérisé par le fait qu'**il comporte un dispositif de localisation (40) par satellite (S).

18. Système permettant l'affichage d'informations, notamment publicitaires, **caractérisé par le fait qu'**il comporte :
- au moins un véhicule (V) équipé d'un dispositif d'affichage (10) agencé pour être aisément visible par des piétons ou automobilistes situés dans le voisinage du véhicule, et un dispositif de contrôle (20) de ce dispositif d'affichage, permettant d'afficher de manière automatique des contenus, notamment publicitaires, différents en fonction de la position géographique du véhicule,
- au moins un émetteur (5 ; 70) externe au véhicule, permettant au dispositif de contrôle (20) de commander l'affichage d'un contenu différent suite à un changement de position du véhicule,
- au moins un récepteur apte à recevoir un signal émis par un téléphone mobile ou un ordinateur portable en vue de passer commande ou de demander l'affichage d'informations supplémentaires.

19. Système selon la revendication 18, **caractérisé par le fait que** l'émetteur est une borne émettrice (70) locale, spécifique au système.

20. Système selon l'une quelconque des revendications 18 et 19, **caractérisé par le fait qu'**il comporte un serveur (90) Internet ou vocal, externe au véhicule, permettant à une personne ayant observé un contenu affiché d'obtenir un complément d'information sur celui-ci.

## Claims

1. A method for sending personalized information to at least one person equipped with a mobile device (M) with a memory (100) and capable of exchanging information via a wireless connection or for reading information stored in said memory, said method comprising the following steps:
- Display information by means of at least one display device (10) distinct from the mobile device and capable of displaying various images
- Detect the presence of said device (M) in a geographical zone
- When said device is present in said geographical zone, read at least one information item in the device's memory, this information having been stored during a prior use of the device or capable of identifying the device
- Send to the device personalized information whose content depends on at least one said information item read in the memory and at least one information item displayed on the display device and/or store information read in the memories of the devices present in said geographical zone between two predetermined instants.

2. A method according to claim 1, **characterized in that** the geographical zone is a function of the location of the display device (10).

3. A method according to one of the preceding claims, **characterized in that** the device's memory (100) is capable of exchanging information via a wireless connection with a transmitter and/or a receiver (110) when the device is found in said geographical zone.

4. A method according to any of the preceding claims, **characterized in that** the device is capable of being connected to at least one server, said memory (100) being capable of containing information sent by the server during a prior connection of the device with said server.

5. A method according to any of the preceding claims, **characterized in that** the mobile device is chosen from the following list: a mobile telephone (M), a personal digital assistant, a laptop computer, particularly a device like a mobile Internet terminal.

6. A method according to any of the preceding claims, **characterized in that** the reading of information stored in the memory (100) is controlled only after a request sent by the device (M) has been detected.

7. A method according to any of the preceding claims, **characterized in that** the length of time that a mobile device is present in the geographical zone is determined based on the information read in the device's memory and if applicable the content displayed.

8. A method according to any of the preceding claims, **characterized in that** the display device is fixed, and constitutes for example an advertising billboard.

9. A method according to any of claims 1 to 8, **characterized in that** the display device is displaced by means of a vehicle and that the display device is configured in such a manner as to be visible to pedestrians or motorists in the proximity of the vehicle.

10. A method according to the preceding claim, **characterized in that** the display device displays various advertising contents depending on the location of the vehicle.

11. A method according to claim 10, the vehicle moving in cities, **characterized in that** the city is divided into various zones (Z₁, ..., Z₅) depending on the preponderance of certain socioeconomic characteristics within the population living therein or commuting therein, particularly its purchasing power, religion, average age, customs, and **in that** the various advertising contents are displayed in accordance with the characteristics of the population living or commuting in the zone in which the vehicle moves.

12. A method according to any of claims 9 to 11, **characterized in that** signals are sent from transmitter terminals (70) installed on the vehicle's route to control the display of various contents, particularly advertisements, each content, particularly an advertisement, being specific to one or more given terminals.

13. A method according to any of the preceding claims, **characterized in that** along with a content, particularly an advertisement, an indication (80) is displayed enabling people to obtain additional information on the subject of the displayed content and/or to place orders, particularly for a product, directly and/or to send their contact details.

14. A method according to any of the preceding claims, **characterized in that** data on the displayed content is transmitted by radio to the mobile device.

15. A device for sending personalised information to at least one person equipped with a mobile device with a memory (100) and capable of exchanging information via a wireless connection, said device being **characterized in that** it comprises:
- A display device to display information, particularly advertisements
- A reading device for reading at least one information item contained in said memory when at least one said device is present in a geographical zone
- A transmitter capable of sending to the device personalized information whose content is a function of at least one said information item read in the memory and at least one information item displayed on the display device.

16. A device according to one of the above two claims, **characterized in that** the display device is fixed.

17. A device according to one of claims 15 and 16, **characterized in that** it comprises a satellite (S) positioning system (40).

18. A system for displaying information, particularly advertisements, **characterized in that** it comprises:
- At least one vehicle (V) equipped with a display device (10) installed to be easily visible to pedestrians or motorists in the proximity of the vehicle, and a control device (20) for this display device, capable of automatically displaying various contents, particularly advertisements, depending on the vehicle's geographical position
- At least one transmitter (5; 70) external to the vehicle, enabling the control device (20) to control the display of a different content following a change in the vehicle's position
- At least one receiver capable of receiving a signal transmitted by a mobile telephone or a laptop computer in view of placing order or requesting the display of additional information.

19. A system according to claim 18, **characterized in that** the transmitter is a local transmitter terminal (70), specific to the system.

20. A system according to any of claims 18 and 19, **characterized in that** it comprises an Internet or voice server (90), external to the vehicle, enabling a person who has observed a displayed content to obtain additional information on it.

## Patentansprüche

1. Verfahren zur Versendung von benutzerdefinierten Informationen an mindestens eine Person, die über ein tragbares Gerät (M) mit Speicher (100) verfügt, welches geeignet ist, Informationen über eine drahtlose Verbindung auszutauschen oder in erwähntem Speicher enthaltenen Informationen zu lesen, wobei das genannte Verfahren folgende Abläufe umfasst:
- Anzeige von Informationen über mindestens eine Anzeigevorrichtung (10) des tragbaren Geräts, welche die Anzeige von unterschiedlichen Bildern ermöglicht,
- Erkennung der Präsenz des erwähnten Gerätes (M) in einer geografischen Zone,
- Lesen von mindestens einer, im Speicher des Gerätes enthaltenen Information während des Aufenthalts in der benannten geografischen Zone, wobei diese Information im Rahmen einer vorherigen Nutzung des Geräts gespeichert wurde oder die es ermöglicht, das Gerät zu identifizieren,
- Versendung an das Gerät von benutzerdefinierten Informationen deren Inhalt abhängig ist von der mindestens einen vom Speicher gelesenen Information, sowie von mindestens einer auf der Anzeigevorrichtung angezeigten Information und/oder Speichern der von den Speichern gelesenen Informationen der in der benannten geografischen Zone präsenten Geräte zwischen zwei vorbestimmten Momenten.

2. Verfahren gemäß Patentanspruch 1, **dadurch gekennzeichnet, dass** die geografische Zone abhängig ist vom Standort der Anzeigevorrichtung (10).

3. Verfahren gemäß einem der vorgenannten Ansprüche, **dadurch gekennzeichnet, dass** der Speicher (100) des Geräts für den Austausch von Informationen über eine drahtlose Verbindung mit einem Sender und/oder Empfänger (110) geeignet ist, wenn sich das Gerät in der erwähnten geografischen Zone befindet.

4. Verfahren gemäß einem der vorgenannten Ansprüche, **dadurch gekennzeichnet, dass** das Gerät für die Verbindung zu mindestens einem Server geeignet ist, wobei der erwähnte Speicher (100) zuvor im Rahmen einer Verbindung des Geräts zu von dem erwähnten Server gesandte Informationen enthalten kann.

5. Verfahren gemäß einem der vorgenannten Ansprüche, **dadurch gekennzeichnet, dass** das tragbare.. Gerät aus folgender Liste ausgewählt wird: Mobiltelefon (M), PDA, Notebook, insbesondere ein Gerät der Art mobiles Internet-Terminal.

6. Verfahren gemäß einem der vorgenannten Ansprüche, **dadurch gekennzeichnet, dass** das Lesen der im Speicher (100) vorhandenen Informationen erst nach einer vom Gerät (M) gesendeten und erkannten Anfrage veranlasst wird.

7. Verfahren gemäß einem der vorgenannten Ansprüche, **dadurch gekennzeichnet, dass** die Dauer der Präsenz eines tragbaren Geräts in der geografischen Zone entsprechend den vom Speicher gelesenen Informationen sowie ggf. vom angezeigten Inhalt bestimmt wird.

8. Verfahren gemäß einem der vorgenannten Ansprüche, **dadurch gekennzeichnet, dass** die Anzeigevorrichtung feststehend ist, wie beispielsweise ein Reklameschild.

9. Verfahren gemäß einem der Ansprüche von 1 bis 8, **dadurch gekennzeichnet, dass** die Anzeigevorrichtung mit Hilfe eines Fahrzeugs bewegt wird und dass die Anzeigevorrichtung so konfiguriert ist, dass diese für Fußgänger oder Autofahrer im Umkreis des Fahrzeugs sichtbar ist.

10. Verfahren gemäß vorgenanntem Anspruch, **dadurch gekennzeichnet, dass** je nach Standort des Fahrzeugs auf der Anzeigevorrichtung verschiedene Werbeinhalte angezeigt werden.

11. Verfahren gemäß Anspruch 10, **dadurch gekennzeichnet, dass** das Fahrzeug durch die Stadt fährt, welche entsprechend bestimmter, vorherrschender sozial-ökonomischer Aspekte der dort lebenden oder sich bewegenden Bevölkerung, insbesondere in Bezug auf ihre Kaufkraft, Religion, Durchschnittsalter, moralische Aspekte und durch die Tatsache, dass die Anzeige der verschiedenen Werbeinhalte im Einklang mit den Charakteren der in der durchquerten Zone lebenden und sich bewegenden Bevölkerung erfolgt, in verschiedene Zonen unterteilt ist (Z₁, ..., Z₅).

12. Verfahren gemäß einem der Ansprüche von 9 bis 11, **dadurch gekennzeichnet, dass** von Sendestationen (70) auf der Wegstrecke des Fahrzeugs ausgehend, Signale zur Steuerung der Anzeige der verschiedenen Inhalte, insbesondere Werbeinhalte gesendet werden, wobei jeder Inhalt, insbesondere jeder Werbeinhalt kennzeichnend für eine oder mehrere Sendestationen ist.

13. Verfahren gemäß einem der vorgenannten Ansprüche, **dadurch gekennzeichnet, dass** zusammen mit einem Inhalt, insbesondere einem Werbeinhalt, ein Hinweis (80) angezeigt wird, der es Personen ermöglicht, zusätzliche Informationen zum angezeigten Inhalt zu erhalten und/oder ein Produkt direkt zu bestellen und/oder ihre persönlichen Angaben zu senden.

14. Verfahren gemäß einem der vorgenannten Ansprüche, **dadurch gekennzeichnet, dass** die Daten bezüglich des auf dem tragbaren Geräts angezeigten Inhalts per Funk übertragen werden.

15. Vorrichtung zur Versendung von benutzerdefinierten Informationen an mindestens eine Person, die über ein tragbares Gerät mit Speicher (100) verfügt, welches geeignet ist, Informationen über eine drahtlose Verbindung auszutauschen, wobei die genannte Vorrichtung folgendes umfasst:
- Eine Anzeigevorrichtung zur Anzeige von Informationen, insbesondere Werbeinhalte,
- Eine Lesevorrichtung welche es ermöglicht, mindestens eine der in genanntem Speicher enthaltenen Informationen während des Aufenthalts von mindestens einem Gerät in einer geografischen Zone zu lesen,
- Einen Sender, der geeignet ist, an das Gerät benutzerdefinierte Informationen zu senden deren Inhalt abhängig ist von der mindestens einen vom Speicher gelesenen Information, sowie von mindestens einer auf der Anzeigevorrichtung angezeigten Information.

16. Vorrichtung gemäß einem der beiden vorgenannten Ansprüche, **dadurch gekennzeichnet, dass** die Anzeigevorrichtung feststehend ist.

17. Vorrichtung gemäß einem der Ansprüche 15 und 16, **dadurch gekennzeichnet, dass** sie ein Lokalisierungssystem (40) per Satellit (S) umfasst.

18. System zur Anzeige von Informationen, insbesondere Werbeinformationen, das folgendes umfasst:
- Mindestens ein Fahrzeug (V), das mit einer für Fußgänger und Autofahrer im Umkreis des Fahrzeugs gut sichtbaren Anzeigevorrichtung (10), sowie einer Kontrollvorrichtung (20) für diese Anzeigevorrichtung ausgestattet ist und welche es ermöglicht, je nach geografischer Position des Fahrzeugs automatisch verschiedene Inhalte, insbesondere Werbeinhalte anzuzeigen,
- Mindestens ein Sender (5 ; 70) außerhalb des Fahrzeugs, der es der Kontrollvorrichtung (20) ermöglicht, die Anzeige einer neuen Information nach einem Positionswechsel des Fahrzeugs zu veranlassen,
- Mindestens ein Empfänger der geeignet ist, ein von einem Mobiltelefon oder einem Notebook gesendetes Signal für eine Bestellung oder zum Aufruf von Zusatzinformationen zu empfangen.

19. System gemäß Anspruch 18, **dadurch gekennzeichnet, dass** es sich bei dem Sender um eine systemspezifische, lokale Sendestation (70) handelt.

20. System gemäß einem der Ansprüche 18 und 19, **dadurch gekennzeichnet, dass** es über einen Internet- oder Vokalserver (90) außerhalb des Fahrzeugs verfügt, der es einer Person, die sich einen der angezeigten Inhalte angesehen hat ermöglicht, zusätzliche Informationen zu diesem Inhalt zu erhalten.
